# EUROPÄISCHE PATENTSCHRIFT

(11) **EP 0 881 070 B1**
(45) Veröffentlichungstag und Bekanntmachung des Hinweises auf die Patenterteilung: **30.07.2003**
(21) Anmeldenummer: 98109298.4
(22) Anmeldetag: 22.05.1998
(51) Int. Cl.: B32B 31/00, B29C 51/14

(54) **Verfahren zur Herstellung verformbarer Acrylplatten mit erhöhter Abrieb- und Kratzfestigkeit vorzugsweise für im Tiefziehverfahren herzustellende Sanitärgegenstände**
Method for producing a deformably acrylic sheet having improved abrasion and scratch resistance, preferably for a sanitaryarticle produced by thermoforming
Procédé de fabrication d'une plaque acrylique déformable ayant une résistance améliorée à l'abrasion et au rayage, de préférence pour un équipement sanitaire fabriqué par thermoformage

(30) Priorität: 28.05.1997 DE 19722559
(43) Veröffentlichungstag der Anmeldung: 02.12.1998
(73) Patentinhaber: Franz Kaldewei GmbH & Co.KG, 59229 Ahlen (DE)
(72) Erfinder: Pieper, Fritz, 27755 Delmenhorst (DE)
(74) Vertreter: Albrecht, Rainer Harald, Dr.-Ing.

(56) Entgegenhaltungen:
- US-A- 4 477 499
- US-A- 5 051 308

## Beschreibung

Die vorliegende Erfindung betrifft ein Verfahren zur Herstellung verformbarer Acrylplatten mit erhöhter Abriebund Kratzfestigkeit, vorzugsweise für im Tiefziehverfahren herzustellende Sanitärgegenstände. Sanitärgegenstände der genannten Art sind z. B. Badewannen, Duschwannen oder dergleichen.

Aus dem Stand der Technik sind Verfahren zur Herstellung von Kunststoff- Sanitärobjekten auf Polymethylmethacrylatbasis bekannt. Diese Kunststoff- Sanitärobjekte, beispielsweise Bade- oder Duschwannen werden meist als Acrylwannen bezeichnet und unterscheiden sich in ihren Eigenschaften von den Stahl-Email-Wannen. Die DE-43 44 577 (A1) beschreibt beispielsweise ein Verfahren zur Herstellung solcher Acrylwannen auf Polymethylmethacrylatbasis. Aus diesem Dokument ist es auch bekannt, dem Polymethylmethacrylat (PMMA) partikelförmige, anorganische Füllstoffe zuzusetzen, die relativ feinteilig sind, deren Partikelgröße jedoch noch im Bereich von 20 bis 60 µm liegt. Bei diesem bekannten Verfahren werden jedoch die Sanitärgegenstände im Gießharzverfahren hergestellt und nicht tiefgezogen. Die gesamte Gießharzsuspension enthält die genannten Füllstoffe, so daß in der fertigen PMMA-Platte die Füllstoffe über deren gesamtes Volumen verteilt angeordnet sind. Die Verwendung der Füllstoffe geschieht bei diesem bekannten Verfahren außerdem dazu, die thermische Beständigkeit der Kunststoff-Sanitärobjekte zu verbessern.

Ein anderes Verfahren aus dem Stand der Technik, das in der DE 43 13 715 (A1) beschrieben ist, beschreibt ebenfalls die Herstellung von Polymermaterialien auf PMMA-Basis unter Verwendung partikelförmiger anorganischer Füllstoffe mit einer Teilchengröße, die vorzugsweise im Bereich oberhalb von 10 µm liegt. Bei diesem Verfahren werden jedoch geschäumte PMMA-Materialien hergestellt, die für die Herstellung von Sanitärobjekten mit besonders abrieb- und kratzfesten Oberflächen weniger geeignet sind. Auch in dieser Schrift ist es nicht vorgesehen, die Polymermaterialien durch Tiefziehen zu verformen.

Es ist dem Fachmann weiterhin bekannt, daß bei herkömmlichen Acrylwannen die Abrieb- und Kratzfestigkeit der Oberfläche meist nicht ausreichend ist, so daß diese Acrylwannen nach längerem Gebrauch an der Oberfläche Kratzspuren aufweisen und/oder stumpf werden und dadurch unansehnlich sind.

Aufgabe der vorliegenden Erfindung ist es ein Verfahren zur Herstellung verformbarer Acrylplatten mit erhöhter Abriebund Kratzfestigkeit zur Verfügung zu stellen, das sich für die Herstellung von Sanitärgegenständen im Tiefziehverfahren eignet, und eine industrielle Serienfertigung zuläßt.

Diese Aufgabe wird gelöst durch ein
Verfahren zur Herstellung einer Sanitärwanne mit erhöhter Abrieb- und Kratzfestigkeit, bei dem man zur Herstellung einer beschichteten Acrylplatine auf eine ebene

Acrylplatine einen Lack aufträgt, den ein Lösungsmittel und dispergierte nanoskalige Teilchen mit einer Größe zwischen 10 und 100 nm enthält, die beschichtete Acrylplatine auf eine erhöhte Umformtemperatur aufheizt und anschließend durch einen Tiefziehvorgang in eine Sanitärwanne umformt .

Ein besonderer Vorteil bei dem erfindungsgemäßen Verfahren liegt darin, daß man auf diese Weise Sanitärgegenstände aus Acryl herstellen kann, die gegenüber den herkömmlichen Acryl-Sänitärgegenständen eine Oberfläche mit erhöhter Abrieb- und Kratzfestigkeit aufweisen, wobei sich diese gleichzeitig durch Tiefziehen in eine beliebige gewünschte Form bringen lassen, ohne daß die Oberfläche durch den Tiefziehvorgang in nachteiliger Weise beeinflußt wird.

Vorzugsweise erfolgt im Rahmen des erfindungsgemäßen Verfahrens der Auftrag des Lacks auf die Acrylplatine mit Hilfe von Rollen oder Rakeln oder auch durch Tauchen oder Fluten der Acrylplatine. Vorzugsweise ist weiterhin vorgesehen, daß man nach dem Auftrag das in dem Lack enthaltene Lösungsmittel eine Zeit lang abdunsten läßt, so daß eine Teilvernetzung in dem Lack stattfindet, bevor der Tiefziehvorgang erfolgt.

Bei dem erfindungsgemäßen Verfahren geht man vorzugsweise so vor, daß man die mit dem Lack beschichtete Acrylplatte zunächst über eine Tiefziehform bringt und mit Hilfe von Heizstrahlern oder dergleichen auf eine erhöhte Temperatur bringt. Vorzugsweise bringt man die beschichtete Acrylplatine, die sich auf der Tiefziehform befindet, mit Hilfe von Heizstrahlern oder dergleichen nach der Beschichtung auf die Verformungstemperatur, so daß beim Tiefziehvorgang eine weitere Wärmezufuhr nicht notwendig ist.

Vorzugsweise ist der Aufheizvorgang vor dem Tiefziehen bei dem erfindungsgemäßen Verfahren vergleichsweise lang gegenüber dem Tiefziehvorgang, beispielsweise dauert der Aufheizvorgang einige Minuten, während der Tiefziehvorgang danach vorzugsweise nur einige Sekunden dauert.

Die Größe der nanoskaligen Teilchen in dem Lack, die man für die Beschichtung der Acrylplatine verwendet liegt bei 10 bis 100 Nanometer, beispielsweise im Bereich zwischen 60 und 80 Nanometer. Die Partikelgröße dieser so genannten nanoskaligen Teilchen ist also erheblich kleiner als dies bei den aus dem Stand der Technik bekannten in den eingangs genannten Dokumenten beschriebenen Verfahren der Fall ist.

Diese nanoskaligen Teilchen sollten in dem Lack der für die Beschichtung der Acrylplatine verwendet wird gleichmäßig verteilt sind. Die Konzentration der nanoskaligen Teilchen in dem Lack beträgt beispielsweise zwischen 1 % und 50 %, vorzugsweise im Bereich von etwa 2 % bis etwa 30 %.

Für diese nanoskaligen Teilchen kommen im Prinzip beliebige kristalline Teilchen in Betracht, vorzugsweise verwendet man anorganische kristalline nanoskalige Teilchen, beispielsweise lassen sich Oxide verwenden wie z. B. Ti O₂, Si O₂ oder Al₂ O₃.

Gegenstand der Erfindung sind außerdem Sanitärgegenstände, die aus verformbaren Acrylplatten mit erhöhter Abrieb- und Kratzfestigkeit nach einem Verfahren mit den erfindungsgemäßen Merkmalen der oben genannten Art hergestellt wurden.

Die in den Unteransprüchen genannten Merkmale betreffen bevorzugte Weiterbildungen des erfindungsgemäßen Verfahrens.

Bei dem erfindungsgemäßen Verfahren wird ein besonders guter Verbund zwischen der Acrylplatte, die die Untergrund oder Trägerschicht bildet und der Beschichtung erhalten. Somit kommt es beim Tiefziehvorgang nicht zu Rissen, Abplatzungen oder sonstigen Ablösungen der Beschichtung.

Die von den Heizstrahlern oder einer ähnlichen Aufheizvorrichtung vor dem Tiefziehvorgang in der Acrylplatte zu erzielende Verformungstemperatur liegt meistens oberhalb von 150 Grad Celsius, beispielsweise in der Größenordnung von etwa 180 Grad Celsius bis 200 Grad Celsius. Das Tiefziehen erfolgt vorzugsweise im Vakuum. Nach dem Tiefziehvorgang erfolgt vorzugsweise eine Abkühlphase, die beispielsweise einige Minuten dauert, wobei man zunächst auf eine Temperatur abkühlen kann, die noch oberhalb der Raumtemperatur liegt. Im Anschluß daran wird der Rohling des so aus der beschichteten Acrylplatte hergestellten Sanitärgegenstands entformt.

Bei dem erfindungsgemäßen Verfahren wird ein Kompositmaterial erhalten, bei dem die Beschichtung einen festen und dauerhaften Verbund mit dem Acryl eingegangen ist, so daß durch den Tiefziehvorgang die Haftung der Beschichtung auf der Acrylplatte nicht beeinträchtigt wird. Durch das Aufheizen der Platte, durch das Verstrecken des Materials unter Vakuum und in der Abkühlphase polymerisiert das Material und verbindet sich mit der Acrylplatte chemisch. Man erhält außerdem eine porenfreie und glatte Oberfläche, die ähnlich ist wie bei einer unbeschichteten Acrylplatte. Die Reinigung von Sanitärgegenständen, die nach dem erfindungsgemäßen Verfahren hergestellt wurden, im Gebrauch ist unproblematisch. Es tritt auch keine Aufkeimung des Materials bei Bakterienbefall auf.

Außerdem ist die spanabhebende Bearbeitung eines so beschichteten Acrylgegenstands möglich, was notwendig ist, um beispielsweise bei Sanitärgegenständen den Rand zu fräsen oder in diesen Sanitärgegenstand zu bohren, um beispielsweise Ab- und/oder Überlaufbohrungen anzubringen, ohne daß es dabei zu Abplatzungen kommt.

Der nach dem erfindungsgemäßen Verfahren beschichtete Sanitärgegenstand hat eine erhöhte Chemikalienbeständigkeit gegenüber solchen aus herkömmlichem PMMA. Es treten keine Farbveränderung auf (ΔE < 1). Weiterhin tritt gegenüber dem ursprünglichen Material kein Glanzverlust auf. Bei visueller Betrachtung der Oberfläche des Sanitärgegenstands ist praktisch kein Unterschied zwischen der erfindungsgemäß beschichteten Acryloberfläche (PMMA-Oberfläche) und einem entsprechenden unbeschichteten Acryl feststellbar. Die Forderungen der DIN EN 198 und 263 werden erfüllt.

Nachfolgend wird die vorliegende Erfindung anhand eines Ausführungsbeispiels unter Bezugnahme auf die beiliegenden Zeichnungen näher beschrieben. Dabei zeigen
- Fig. 1: eine schematisch vereinfachte Darstellung des Auftrags des Lack's auf eine Acrylglasplatine;
- Fig. 2: eine schematisch vereinfachte Darstellung der verschiedenen Phasen der Herstellung einer erfindungsgemäßen beschichteten Acrylglasplatte.

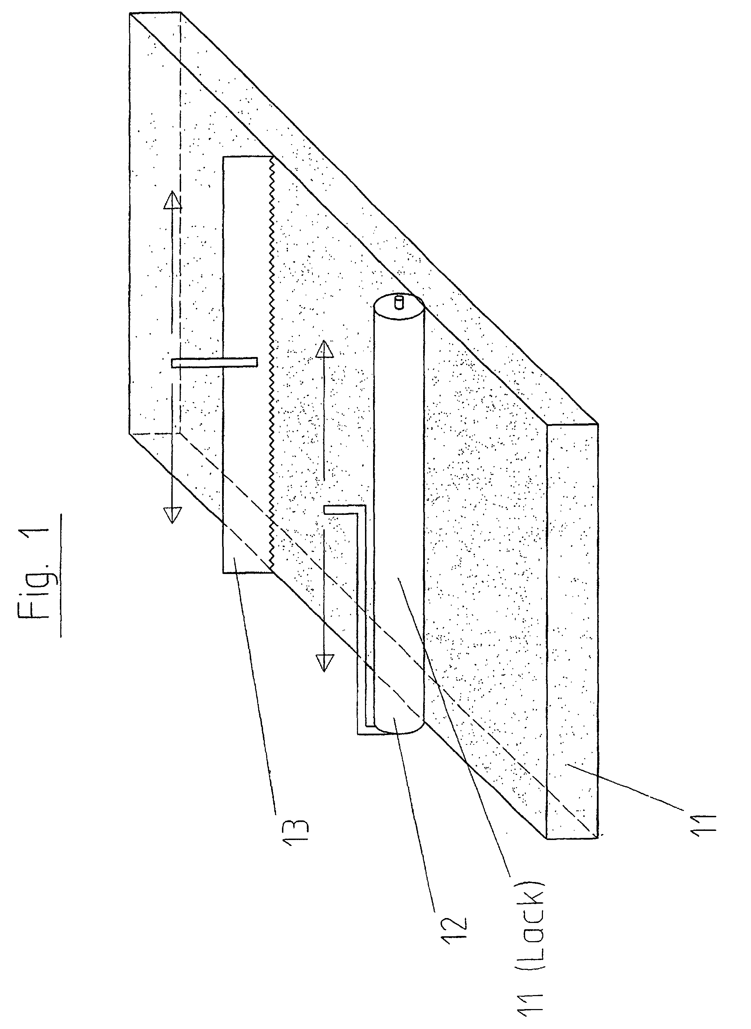

Zunächst wird auf Fig. 1 Bezug genommen. Wie man aus der Darstellung erkennt erfolgt der Auftrag des Lack's 11 auf die Acrylglasplatine 10 (den Acrylglasrohling) z. B. mittels eines in Längsrichtung entlang der Acrylglasplatine 10 beweglichen Rakels 13. Alternativ dazu kann man den Lack 11 für die Beschichtung auch mit Hilfe einer oder mehrerer Rollen 12 in Längsrichtung oder auch in Querrichtung auf die Acrylglasplatine 10 aufrollen. Beide alternativen genannten Möglichkeiten sind der Einfachheit halber hier in einer Darstellung wiedergegeben.

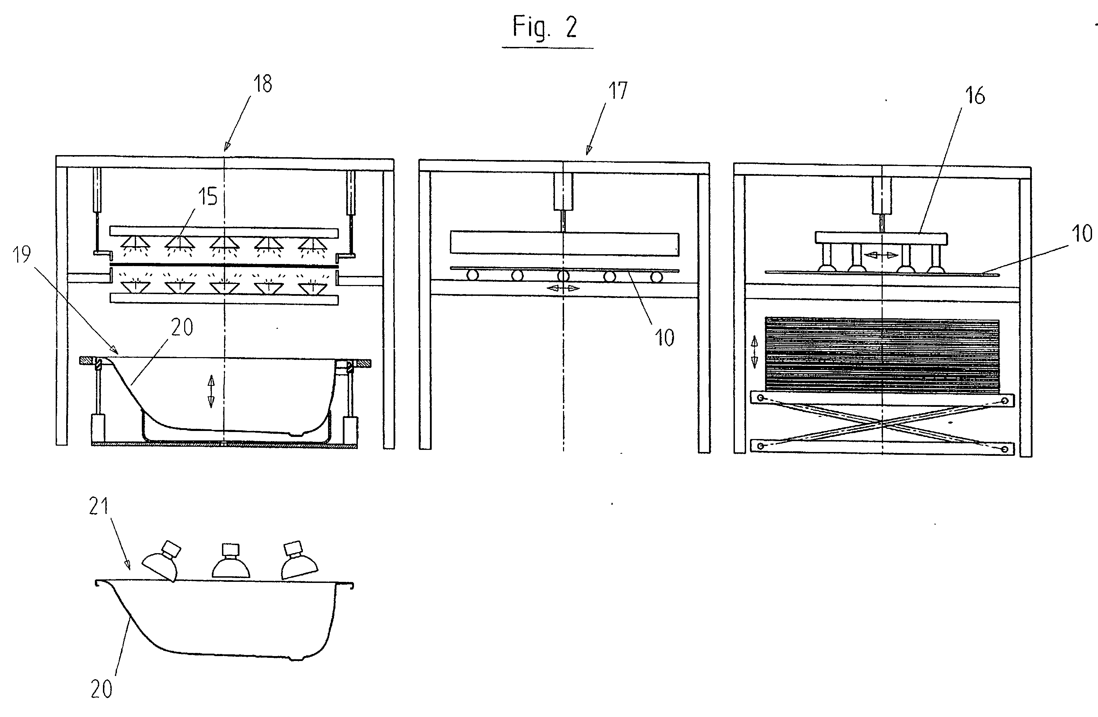

Der Ablauf des gesamten Verfahrens läßt sich anhand von Fig. 2 näher erläutern. Zunächst wird in der in der Zeichnung ganz rechts dargestellten Station eine Acrylglasplatine 10 (Rohling) von einem Plattenstapel mittels eines Platinenladers 16 entnommen und einer Lackierstation 17 zugeführt. Dort erfolgt die bereits oben unter Bezugnahme auf Fig. 1 beschriebene Beschichtung der Acrylglasplatine 10 mit dem Lack 11 in der geschilderten Weise. In der Lackierstation 17 kann eine Vorhärtung des Lack's 11 erfolgen. Anschließend wird die beschichtete Acrylglasplatine 10 mittels geeigneter an sich bekannter Fördereinrichtungen zu einem in der Zeichnung gemäß Fig. 2 links dargestellten Tiefziehautomaten 18 gefördert, wo sie zunächst durch die Heizstrahler 15 aufgeheizt wird, vorzugsweise auf die gewünschte Verformungstemperatur. Danach erfolgt in der darunter angeordneten Tiefziehvorrichtung 19 der eigentliche Tiefziehvorgang, wobei ein Sanitärgegenstand 20, z. B. eine Badewanne hergestellt wird. Danach kann noch in einer Nachhärtestation 21 eine Bestrahlung der Oberfläche des Sanitärgegenstands 20 zur Nachhärtung der Lackbeschichtung 11 erfolgen.

Bei dem erfindungsgemäßen Verfahren dient die Verweilzeit in der Lackierstation 17 (Tiefziehvorgang) zur Eigennivellierung des Lack's, zum Abdunsten des Lösungsmittels und zum Beginn der Vernetzung. Die Polymerisation erfolgt während des Aufheizens der Platte, die Nachpolymerisation erfolgt durch das Tiefziehen und während der Abkühlphase. Eine Nachhärtung, wenn erforderlich, erfolgt in der Nachhärtestation 21.

Da man ein fast geschlossenes System hat, treten keine Emissionen aus. Ein weiterer Vorteil ist der vorzugsweise automatische Ablauf des Verfahrens.

## Patentansprüche

1. Verfahren zur Herstellung einer Sanitärwanne mit erhöhter Abrieb- und Kratzfestigkeit, bei dem man zur Herstellung einen beschichteten Acrylpatine auf eine ebene Acrylplatine einen Lack aufträgt, den ein Lösungsmittel und dispergierte nanoskalige Teilchen mit einer Größe zwischen 10 und 100 nm enthält, die beschichtete Acrylplatine auf eine erhöhte Umformtemperatur aufheizt und anschließend durch einen Tiefziehvorgang in eine Sanitärwanne umformt .

2. Verfahren nach Anspruch 1, **dadurch gekennzeichnet, dass** nanoskalige Teilchen mit einer Größe von 60 bis 80 nm verwendet werden.

3. Verfahren nach Anspruch 1 bis 2, **dadurch gekennzeichnet, dass** nanoskalige Teilchen aus einem kristallinen und anorganischen Material verwendet werden.

4. Verfahren nach Anspruch 3, **dadurch gekennzeichnet, dass** nanoskalige Teilchen verwendet werden, die aus TiO₂, SiO₂ oder Al₂O₃ bestehen.

5. Verfahren nach Anspruch 1 bis 4, **dadurch gekennzeichnet, dass** eine Beschichtung verwendet wird, in der die Konzentration der nanoskaligen Teilchen zwischen 1 % und 50 % beträgt.

6. Verfahren nach Anspruch 1 bis 5, **dadurch gekennzeichnet, dass** nach dem Auftrag des Lacks auf die Acrylplatine das in Lack enthaltene Lösungsmittel teilweise abdunstet, so dass eine Teilvernetzung in der Beschichtung stattfindet, bevor die Acrylplatine auf die Umformtemperatur aufgeheizt wird.

7. Verfahren nach Anspruch 1 bis 6, **dadurch gekennzeichnet, dass** die beschichtete Acrylplatine vor dem Aufheizen auf die Umformtemperatur über eine Tiefziehform gebracht wird und danach die Aufheizung mit Hilfe von Heizstrahlern oder dergleichen erfolgt.

8. Verfahren nach Anspruch 1 bis 7, **dadurch gekennzeichnet, dass** die Umformtemperatur mehr als 150° C beträgt.

9. Verfahren nach Anspruch 8, **dadurch gekennzeichnet, dass** die Umformtemperatur etwa 180° bis 200° C beträgt.

10. Verfahren nach Anspruch 1 bis 9, **dadurch gekennzeichnet, dass** die durch den Tiefziehvorgang hergestellte Sanitärwanne vor der Entformung zur Nachpolymerisation auf eine Temperatur oberhalb der Raumtemperatur abgekühlt wird.

11. Verfahren nach Anspruch 1 bis 10, **dadurch gekennzeichnet, dass** die Sanitärwanne nach der Entformung einer Wärmebehandlung unterzogen wird, durch die eine Nachhärtung der Oberfläche erfolgt.

## Claims

1. A method of producing a sanitary tub having increased abrasion- and scratch-resistance, wherein a lacquer which contains a solvent and dispersed nanometre-scale particles with a size between 10 and 100 nm is applied to a flat acrylic sheet in order to produce a coated acrylic sheet, the coated acrylic sheet is heated to an elevated deformation temperature and is subsequently formed into a sanitary tub by a thermoforming operation.

2. A method according to claim 1, **characterised in that** nanometre-scale particles with a size from 60 to 80 nm are used.

3. A method according to claim 1 or 2, **characterised in that** nanometre-scale particles of a crystalline, inorganic material are used.

4. A method according to claim 3, **characterised in that** nanometre-scale particles are used which consist of TiO₂, SiO₂ or Al₂O₃.

5. A method according to claims 1 to 4, **characterised in that** a coating is used in which the concentration of nanometre-scale particles is between 1 % and 50 %.

6. A method according to claims 1 to 5, **characterised in that** after the application of the lacquer to the acrylic sheet the solvent contained in the lacquer is partially evaporated so that partial crosslinking occurs in the coating before the acrylic sheet is heated to the deformation temperature.

7. A method according to claims 1 to 6, **characterised in that** before it is heated to the deformation temperature the coated acrylic sheet is placed over a thermoforming mould and thereafter heating is effected with the aid of thermal radiators or the like.

8. A method according to claims 1 to 7, **characterised in that** the deformation temperature is higher than 150°C.

9. A method according to claim 8, **characterised in that** the deformation temperature is about 180° to 200°C.

10. A method according to claims 1 to 9, **characterised in that** before demoulding the sanitary tub which is produced by the thermoforming operation is cooled to a temperature above room temperature for subsequent polymerisation.

11. A method according to claims 1 to 10, **characterised in that** after demoulding the sanitary tub is subjected to heat treatment, by which post-curing of the surface is effected.

## Revendications

1. Procédé de fabrication d'une baignoire présentant une plus grande résistance à l'usure et aux rayures, dans lequel, pour réaliser une platine acrylique avec revêtement, on applique, sur une platine acrylique plane, une laque qui contient un solvant et des particules en dispersion d'un ordre de grandeur des nanomètres dont la taille est comprise entre 10 et 100 nm, la platine acrylique avec revêtement étant chauffée à une température de déformation supérieure puis formée en baignoire par une opération d'emboutissage profond.

2. Procédé selon la revendication 1, **caractérisé en ce qu'**on utilise des particules d'un ordre de grandeur des nanomètres d'une taille comprise entre 60 et 80 nm.

3. Procédé selon les revendications 1 et 2, **caractérisé en ce qu'**on utilise des particules d'un ordre de grandeur des nanomètres d'une matière cristalline et non organique.

4. Procédé selon la revendication 3, **caractérisé en ce qu'**on utilise des particules d'un ordre de grandeur des nanomètres qui sont constituées de TiO₂, SiO₂, ou Al₂O₃.

5. Procédé selon les revendications 1 à 4, **caractérisé en ce qu'**on utilise un revêtement dans lequel la concentration en particules d'un ordre de grandeur des nanomètres est comprise entre 1 % et 50 %.

6. Procédé selon les revendications 1 à 5, **caractérisé en ce qu'**après application de la laque sur la platine acrylique, le solvant contenu dans la laque s'évapore partiellement, de sorte qu'a lieu une réticulation partielle dans le revêtement, avant que la platine acrylique soit chauffée à la température de formage.

7. Procédé selon les revendications 1 à 6, **caractérisé en ce qu'**avant le chauffage à la température de formage, la platine acrylique avec revêtement est amenée sur un moule d'emboutissage profond puis le chauffage s'effectue à l'aide de radiateurs chauffants ou similaires.

8. Procédé selon les revendications 1 à 7, **caractérisé en ce que** la température de formage est supérieure à 150 °C.

9. Procédé selon la revendication 8, **caractérisé en ce que** la température de formage est comprise entre environ 180° et 200 °C.

10. Procédé selon les revendications 1 à 9, **caractérisé en ce que** la baignoire réalisée par l'opération d'emboutissage profond est refroidie, avant le démoulage, en vue de la polymérisation complémentaire, à une température supérieure à la température ambiante.

11. Procédé selon les revendications 1 à 10, **caractérisé en ce qu'**avant le démoulage, la baignoire est soumise à un traitement thermique par lequel se produit un durcissement complémentaire de la surface.
